# EUROPEAN PATENT SPECIFICATION

(11) **EP 3 831 335 B1**
(45) Date of publication and mention of the grant of the patent: **07.06.2023**
(21) Application number: 19383070.0
(22) Date of filing: 02.12.2019
(51) Int. Cl.: A61C 8/00

(54) **A DENTAL IMPLANTOLOGY ASSEMBLY**
ZAHNIMPLANTOLOGIE-ANORDNUNG
UN ENSEMBLE D'IMPLANTOLOGIE DENTAIRE

(43) Date of publication of application: 09.06.2021
(73) Proprietor: Terrats Medical, S.L., 08210 Barberà del Vallès (ES)
(72) Inventor: TERRATS BES, Ramon, 08192 SANT QUIRZE DEL VALLÈS (ES)
(74) Representative: Sugrañes, S.L.P.

(56) References cited:
- EP-A1- 2 647 347
- DE-A1-102019 203 222
- GB-A- 2 506 634
- US-A1- 2019 117 345

## Description

### Technical field of the invention

The present invention relates to a dental implantology assembly comprising an implant body devoid of an axial central bore, that is, the implant body does not have the standard central bore wherein there is housed a screw for fixing the implant body to a prosthetic abutment. The dental implantology assembly, in addition to the implant body, also comprises a prosthetic abutment intended for being coupled to the implant body, and a tightening screw intended for fixing the prosthetic abutment to the implant body.

It is a well known fact that, due to implant placement errors, either because when the surgeon is searching for an area with better bone quality, due to aesthetic needs or execution errors, he/she is obliged to place the implant at an orientation other than that required by the prosthetic solution. That difference in orientation is corrected by prosthetic angulation means. This situation occurs particularly in cases of replacing incisors and canines where, because of their morphology and with the current state of the art, the mentioned error of the axis of the implant with respect to the axis desired for the prosthetic element often needs to be corrected. The magnitude of that correction increases because of the need to shift the receiving channel of the screw which fixes the prosthetic abutment towards the lingual face of the artificial piece for aesthetic reasons, which reduces options and, therefore, the chances of success.

The implantology assembly object of the invention offers considerable advantages with respect to the known art in the field of correcting the angulation of the prosthetic axis with respect to implant placement axis.

### Background of the invention

The technique which consists of replacing missing teeth by implanting prosthetic elements is well known, and in addition to carrying out the chewing function, these elements are aesthetically appealing and provide correct verbal articulation.

This implantology method consists of replacing the roots of missing teeth with implants, usually made of titanium, which experience osseointegration with the maxillary bone and confer sufficient rigidity for supporting prosthetic dental structures, whether these structures are removable or screwed in.

In most prosthetic solutions by means of implants, around 94 % according to some studies, this objective is achieved by means of the placement of implants provided with a central threaded bore that coincides with the axis of the implant, where there is subsequently housed a screw intended for securing the visible prosthesis, usually made up of a prosthetic abutment and a dental crown.

The difference in orientation between the axis of the implant with respect to the axis desired for the prosthetic element is corrected by prosthetic angulation means.

It is precisely the central threaded bore that determines the morphology of the implant, particularly in those with a small diameter, which are the most common for incisor replacement.

Obviously, if an internal threaded bore is made in an implant with a small diameter, the resulting walls will have a very small thickness, determining an outer thread with little depth. Assuredly titanium is capable of osseointegration by means of a minimal thread or even without a thread, but the absence of a mechanical fixing from the time of the implantation can increase the chance of failure, and particularly in the option referred to as "immediate loading", that is when the patient, who still has with limitations, is able to use a provisional denture from the time of implant placement.

Document EP2647347-A1 relates to a prosthetic attachment comprising a support piece which can be fixed in a dental implant and a mounting assembly which can be coupled to a prosthetic structure. The joint between the support piece and the mounting assembly is a ball-and-socket type joint. The support piece includes a substantially spherical connection section provided with radially distributed flexible sectors. The mounting assembly comprises a primary element with a substantially spherical cavity and provided with a threaded through hole wherein a screw with a spherical head is inserted. Thus, the spherical head can be introduced into the inner region of the connection section of the support piece and the wall that forms the substantially spherical cavity of the primary element can be adjusted to partially and externally surround the connection section of the support piece, such that the mounting assembly is rotatively coupled. Although according to some embodiments an inclination angle of 20° can be achieved between the implant with respect to the mounting assembly, the screw head imposes a certain height between the implant shoulder and the aesthetic prosthesis.

Patent document US7214063-B2 describes an implant system which can be considered a prosthetic assembly, including: an implant for implanting in a bone; an abutment to serve as a support for fixing a prosthesis to the implant; and a pivotal coupling between the implant and the abutment to permit, after the implant has been fixed to the bone, precise angulation in all directions of the abutment with respect to the implant before the abutment is fixed at the desired angulation with respect to the implant. The implant is a conventional implant with a threaded central bore to allow the implant to receive in some cases the fixing screw of the abutment. Due to the existence of said bore, the size of the outer fixing thread for fixing to the maxillary bone is limited, as discussed above.

Document US20190117345-A1 discloses a dental implant system that includes an upper implant body coupled to a lower body with an axial central bore, and a cavity between the upper and lower implant bodies. The system can further include an anchor at least partially disposed within the cavity. The system can also include an abutment that couples to the anchor and serves as a mounting are for a crown. The anchor can be rotatable and swivelable, allowing the lower implant body to be implanted at an angle in bone while permitting the crown to be positioned in a natural tooth orientation. Due to the existence of the axial central bore in the lower implant body, the size of the outer fixing thread for fixing to the maxillary bone is limited, as previously discussed.

Patent document US6843653-B2 describes an implantology assembly having an elongated implant body devoid of a central bore. The implant body includes a first end and a second end. The first end is adapted to be implanted in the patient's mandibular or maxillary bone. An adjustable abutment having a projecting head for receiving a dental prosthesis is movably mounted in the second end of the implant body. A collar is provided for engaging the second end of the implant body and securing the support in a fixed position.

This implantology assembly comprises an implant body, a prosthetic abutment and a securing collar which are built such that the securing collar cannot be removed from the implant body. The implant body has an elongated generally cylindrical shape and includes a tapered first end, which is to be inserted into an aperture in the patient's mandibular or maxillary bone. For this purpose, the first end may be provided with external threads. Opposite the first end, the implant body has a concave or bowl-shaped second end. Threads are located around the outside periphery of the second end of the implant body. An abutment is provided having a convex or spherical portion attached to a prismatic-shaped projecting head and an aperture or bore in the head. The prismatic-shaped projecting head has four or more flat surfaces for coupling with a dental prosthesis. The aperture may be threaded to matingly receive a screw or positioning tool. The convex or spherical portion of the abutment is adapted to fit in the concave portion of the implant body. The securing collar has an aperture that is large enough to fit over and pass through the prismatic-shaped head.

In this case, the axis of the thread whereby the collar locks the sphere is the axis of the implant itself, and the range of movement of the oscillating portion is limited by the allowance of the through bore of the mentioned collar. The small angle that is achieved can be seen in the drawings of said patent document. With the small oscillating abutment being conditioned by this small diameter, it may encounter difficulties in performing the function itself of a prosthetic abutment, being limited to receiving the fixing screw of a dental crown.

Therefore, it would be desirable to offer a solution to cases of the type described which require an angulation between the axis of the implant body and the prosthetic abutment in order to obtain an implantology assembly which offers the patient an immediate loading option while at the same time the small diameter of the implant to be placed does not represent a drawback.

### Explanation of the invention

For the purpose of providing a solution to the drawbacks that have been considered, a dental implantology assembly is disclosed which comprises an implant body devoid of an axial central bore of the type of axial central bore that houses a screw for fixing an implant body to a prosthetic abutment, a prosthetic abutment intended for being coupled to the implant body, and a tightening screw intended for fixing the prosthetic abutment to the implant body.

Essentially, the dental implantology assembly is characterized in that the implant body is a single body comprising a solid apical segment for being fixed to the maxillary bone provided with a fixing thread, a solid gingival closure segment, and a connection segment configured by an open housing with a mostly spherical enveloping outer surface and a hollow with a mostly semispherical concave surface, wherein the center of the spherical outer surface coincides with the center of the semispherical surface of the hollow, the connection segment being formed by a plurality of radially distributed flexible sectors or petals in the form of spherical lunes.

It is also characterized in that the prosthetic abutment is formed by a body provided with a coupling cavity with a spherical concave surface formed by a wall which can be fitted in a partially enveloping manner and on the outside to the connection segment of the implant body, and provided with a threaded through hole.

Thus, the body forming the prosthetic abutment is provided with an axial aperture communicating two open opposite ends, the axial aperture being formed at one end by the spherical coupling cavity for coupling to the implant body, configured by a spherical concave surface with its center located inside the spherical coupling cavity. This spherical coupling cavity has a diameter such that said cavity has room for the housing with the fitting therein of a portion of the connection segment of the implant body. The axial aperture at the other end of the body of the prosthetic abutment corresponds to the threaded bore, communicating with the spherical coupling cavity and allowing the threaded attachment of the tightening screw to the prosthetic abutment.

In addition to the foregoing, the implantology assembly of the invention is also characterized in that the tightening screw is formed by a screw head with mostly a spherical surface, followed by a cylindrical neck and by a threaded shank that can be introduced in the threaded through hole of the prosthetic abutment, such that the screw head is capable of being introduced in the hollow of the connection segment of the implant body with the threaded shank of the tightening screw inserted in the threaded through hole of the prosthetic abutment. The longitudinal axes of the cylindrical neck and of the threaded shank are collinear with the center of the spherical surface of the screw head. The diameter of the spherical surface of the screw head is such that said head can be fitted in the hollow of the connection segment of the implant body, and the threads of the threaded shank are those which correspond for the threaded attachment with the threaded bore of the prosthetic abutment.

It is characteristic of the implantology assembly object of the invention to be able to adopt an operative mounting position of its components. In said operative mounting position, the spherical head of the tightening screw is inside the hollow of the connection segment of the implant body, with the threaded shank of the tightening screw inserted in the threaded through hole of the prosthetic abutment, and the wall forming the spherical coupling cavity of the prosthetic abutment is fitted in a partially enveloping manner and on the outside to the connection segment of the implant body.

In the operative mounting position, the center of the outer surface of the connection segment of the implant body, the center of the spherical concave surface of the prosthetic abutment and the center of the spherical surface of the screw head coincide in position. In other words, in said position, the outer surface of the connection segment of the implant body, the spherical concave surface of the prosthetic abutment and the spherical surface of the screw head are concentric.

In the operative mounting position, the prosthetic abutment and the tightening screw have the capacity to rotate integrally with respect to the implant body about the longitudinal axis of the threaded shank of the tightening screw, as well as the capacity to turn integrally with respect to the implant body such that the axial axis of the implant body and the longitudinal axis of the threaded shank can be arranged forming a plurality of angles with one another.

The implantology assembly object of the invention is thereby a solid body implant system with a ball and socket connection with the prosthetic abutment and the tightening screw, designed to correct inclination errors with respect to positioning, without a threaded bore for housing the screw intended for fixing a prosthetic element, wherein the implantology assembly itself comprises the adjustable prosthetic element, that is, the prosthetic abutment.

The absence of an internal threaded bore in the implant body allows a more effective thread profile, which qualifies it for the so-called "immediate loading" application. The mentioned absence of the central screw allows for an ingenious oscillation system for the prosthetic assembly which allows up to 32° angular correction between the axis of the prosthetic portion and the implant body itself. It also allows for the possibility of complete 360° orbital fixing, without limitations, by being able to turn the prosthetic abutment and the tightening screw around their own longitudinal axis with respect to the prosthetic abutment body.

The outermost element of the oscillating implantology assembly, the prosthetic abutment body, can be fitted with its opposing element (the prosthetic capsule or cap) housed in the prosthesis by means of a geometry that can be tapered to correct the lack of parallelism, furthermore allowing according to its taper, the fixing of the prosthesis to implants to achieve in this case a removable prosthesis without detriment to the option of screwing, thus achieving a fixed prosthesis.

The plurality of angles between the axial axis of the implant body and the longitudinal axis of the prosthetic end comprises values of angles ranging from 0° to 32°. Furthermore, the mentioned 32° correction capacity is increased based on the taper of the prosthetic abutment itself. Thus, a prosthetic abutment with a tapered wall or side surface of 8° inclination (16° conical angle), as depicted in the drawings presented below, represents a real correction capacity of 40°, which capacity increases in the proportion by which the mentioned conical angle increases.

According to another alternative variant of the dental implantology assembly of the invention, instead of having a tapered outer surface, the prosthetic abutment can have a cylindrical outer surface.

According to an additional feature of the invention, the hollow of the connection segment of the implant body comprises, from its open end to the semispherical concave surface, a cylindrical surface segment with a diameter equal to the diameter of the spherical head of the tightening screw.

According to another feature of the invention, the gingival closure segment of the implant body comprises a smooth gingival closure area and may optionally further comprise an area with a fine thread profile, that is, with much more pronounced dimensions than the thread of the apical segment of the implant body, such as for example a morphology corresponding to that attributed to a micro thread in the technical field of dental components.

According to a feature of the invention, the implant body comprises a neck formed by a solid section arranged between the connection segment and the gingival closure segment.

According to another additional feature, the connection segment of the implant body comprises several slots in the direction of the meridians of the mostly spherical enveloping outer surface which separate the radially distributed flexible sectors or petals in the form of spherical lunes.

According to another additional feature, in the tightening screw, the threaded shank is provided at its free end opposite the cylindrical neck with an impression or groove for the insertion of the tip of a tool for applying torque to the tightening screw.

Optionally, the prosthetic abutment may comprise at the edge of the end of the spherical coupling cavity at least one additional angulation notch which allows additional angulation, preferably a curved additional angulation notch.

Alternatively, the prosthetic abutment may comprise at the edge of the end of the spherical coupling cavity at least one plane which allows additional angulation,

Additionally, the prosthetic abutment may also be contemplated to comprise on its outer surface several notches, cuts, faces or profiles for applying torque.

As described in the background section of the invention, currently only about 6 % of prosthetic dental implants are solid body implants. That minority is basically made up of zirconium or titanium implants with their occlusal end in the form of a stump to cement an aesthetic prosthesis, or in the form of a ball for removable solutions. The vast majority of the remaining 94 % have a partially hollow body due to the prosthetic screw housed therein. Although there are a minority which replace the threaded bore with a slightly tapered bore where the prosthetic element is fixed by friction (driving force), for all intents and purposes the mentioned central bore is still necessary.

Given the aforementioned features, the implantology assembly object of the present invention allows angular correction of the prosthetic axis with respect to the axis of the implant body. The assembly is basically made up of the three parts, that is, implant body, prosthetic abutment and tightening screw, wherein the last two parts, integrally with one another, freely orbit and pivot with respect to the implant body, conferring to said assembly ample application freedom, and furthermore, in the absence of geometric shapes which determine the positioning of a conventional prosthetic abutment, the sequence of manufacturing and placement actions of the prosthetic elements are simplified, whether they are single teeth, bridges or full arch implants.

The fact that the connection segment is located in the implant body itself instead of in an abutment or prosthetic accessory provides considerable advantages.

The absence of a central bore in the implant body confers greater rigidity to same and allows smaller diameters, in addition to a more effective thread profile for the initial mechanical fixing of the implant body to the bone. It may in turn provide reliable osseointegration and additional rigidity for use of immediate loading, facilitating the fixing to the bone from the time of placement. It also allows a considerable reduction in height between the shoulder of the implant body and the aesthetic prosthesis because it is lacking a conventional screw head and the base where pressure is applied to same.

The absence of the conventional central bore allows in the implant body a neck with a smaller diameter and, accordingly, a much larger angulation of the prosthetic abutment with respect to the axis of the implant body. So much so that in the accessory working according to this principle, an angulation of 20° is achieved; in the implant body component of the implantology assembly of the present invention, the inclination increases to 32° which, added to the additional 8° in the case of coupling a prosthesis by means of a frustoconical shape, goes up to 40°, which truly represents a very significant magnitude that can solve most problems relating to differences in angulation of implants.

In that sense, the advantage represented by the implantology assembly object of the present invention with respect to the current technique stands out. It must be taken into account that most known implants are provided with a hexagonal geometric shape, triangular shape or another shape which determines the position of the prosthesis, and that additionally each specific need requires a certain angulation. These two variables combined with one another make it difficult to achieve an ideal prosthetic abutment for each case, which in practice often represents the need to manufacture prosthetic abutments customized for each case.

The implantology assembly object of the present invention provides a novel operation by means of a mechanism with which the position of the prosthetic abutment can be fixed in any radial position in 360° due to the capacity of rotating integrally with respect to the implant body about the longitudinal axis of the threaded shank of the tightening screw, and in any position angular in the range of 0-32° (40° with a frustoconical coupling), with the axial axis of the implant body and the longitudinal axis of the prosthetic end forming a plurality of angles. Furthermore, small prosthesis manufacturing errors can even be corrected at the time of placement.

In a preferred option, the force of screwing the implant body into the bone is achieved by applying torsion (torque) on the prosthetic abutment, with the locking of the assembly by the tightening screw being required for said operation. As the assembly does not have a geometric shape with an anti-turning function, the implantology assembly can be locked in any of the mentioned positions, from 0-360° for rotation or turning and from 0-40° in angulation, without stops.

### Brief description of the drawings

In the attached drawings, several preferred embodiments of the implantology assembly object of the invention are illustrated by way of non-limiting example. In said drawings:
Figure 1 is a perspective view of the implant which is part of the implantology assembly object of the invention sectioned by a vertical longitudinal plane;
Figure 2 is a section view according to a vertical longitudinal plane of section of the prosthetic abutment which is part of the implantology assembly object of the invention;
Figure 3 is an elevational view of the left half of the prosthetic abutment of Figure 2;
Figure 4 is a plan view of the left half of the prosthetic abutment of Figure 2;
Figure 5 is an elevational view of the tightening screw which is part of the implantology assembly object of the invention;
Figure 6 is a top view of a first embodiment of the tightening screw of Figure 5, in which is shown the impression or hollow where the torsional force to operate the screw is applied, which in this first embodiment is an impression or hollow with a hexalobular profile;
Figure 7 is a section view according to a vertical longitudinal plane of section of a prosthetic capsule or cap which is not part of the implantology assembly object of the invention, although it is shown as a preferred option for collaborating with the implantology assembly to improve the clarity of the assembly;
Figures 8a, 8b and 8c are section views according to a vertical longitudinal plane of section of the implantology assembly object of the invention in different positions, showing in Figure 8a the assembly in an aligned position, in Figure 8b in a position with an inclination of 32° of the axis of the implant with respect to the prosthetic assembly, and in Figure 8c the same assembly, but shifted another 8°, making the most of the possibility of mounting by means of a frustoconical capsule of 8° in the prosthesis;
Figure 9 shows a view similar to Figure 8a which schematically depicts the application of a torsional moment on the impression of the tightening screw;
Figure 10 shows two implantology assemblies objects of the invention with the axes of the implant bodies at an inclination of 32° and fitted;
Figure 11 shows the same situation as Figure 10 but with the prosthesis somewhat separated;
Figure 12 shows the same situation as Figure 10 with the implants at 40° and also fitted, where it can be observed that the prosthetic capsules are forced 8°, which is the mounting limit;
Figure 13 shows the implantology assembly of the first embodiment during the operation of assembling same to acquire the mounting position; and
Figure 14 shows a second embodiment of the implantology assembly object of the invention, wherein the tightening screw is provided with a threaded bore.

### Detailed description of the drawings

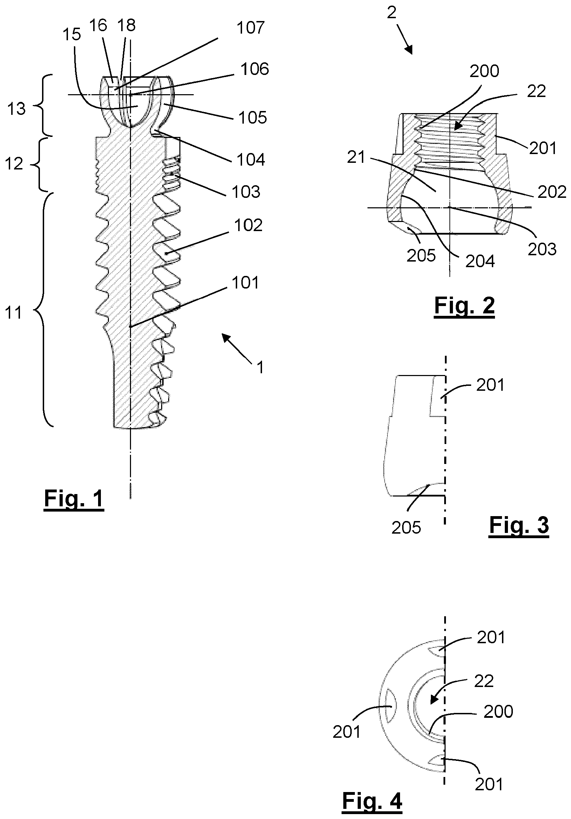

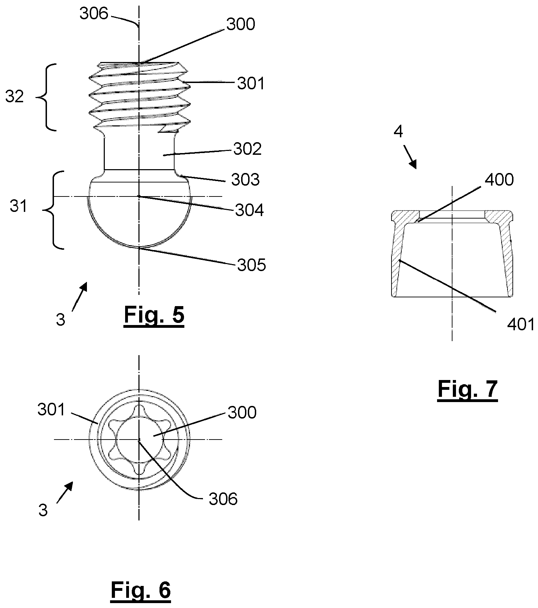

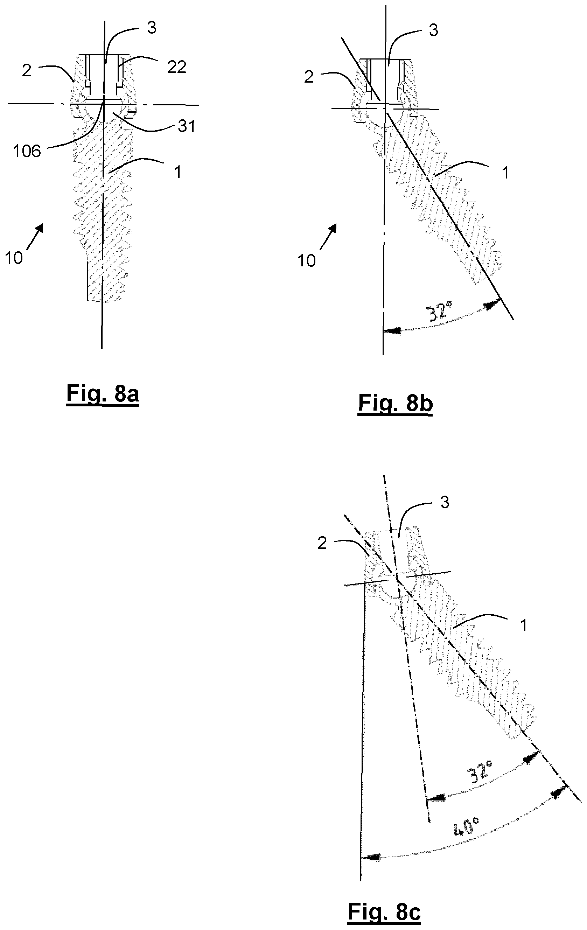

Figures 8 to 12 depict the dental implantology assembly 10, which is basically formed by an implant body 1 (see Figure 1) devoid of an axial central bore, a prosthetic abutment 2 intended for being coupled to the implant body 1 (see Figures 2 a 4), and a tightening screw 3 (see Figures 5 and 6) intended for fixing the prosthetic abutment 2 to the implant body 1.

As can be seen in detail in Figure 1, the implant body 1 does not have the standard central bore wherein in most implants there is housed a screw for fixing same to a prosthetic abutment. The implant body 1 is a single body comprising three different segments: an apical segment 11 for fixing to the maxillary bone, a solid (and at least in part smooth) gingival closure segment 12, and a connection segment 13. In Figure 1 the implant body 1 is depicted with a specific morphology, having a self-tapping apical end with a very strong or pronounced profile (see the profile of the fixing thread 102), followed by an optional fine thread, which does not limit other geometries.

The apical segment 11 is the portion of the implant body 1 which is completely or partially screwed to the maxillary bone. The fixing apical segment 11 is solid and provided externally on the fixing thread 102 for anchoring the implant body 1 to the maxillary bone. As it is devoid of an axial central bore for a screw, the apical segment 11 enables threads as depicted in Figure 1, which facilitate mechanical fixing to the mandibular bone from the time of insertion, even before the osseointegration process occurs, facilitating the immediate loading and increasing the chances of success in osseointegration. It enables a profile for the fixing thread 102 having a pronounced geometry, even in options with a small diameter. Chances of success further increase as the implant body 1 is immobilized with respect to the bone during the mentioned osseointegration process.

The gingival closure segment 12 is formed by a solid cylindrical body, by way of a shoulder of the implant body 1. Said gingival closure segment 12 can have a smooth surface in its entirety or can be externally provided with a thread profile 103 in the area closest to the apical segment 11, as depicted in the implant body 1 of the drawings. It can also dispense with the thread and considerably limit its length. Between the gingival closure segment 12 and the connection segment 13, the implant body 1 comprises a neck 104 formed by a solid section somehow forming a type of lateral housing which will be explained below. Thus, since the implant body 1 is devoid of the conventional central bore for housing a screw, the neck 104 about which the prosthetic portion oscillates is also solid, which confers greater robustness and allows reducing the diameter, which in turn represents a higher capacity of inclination, as will be seen later.

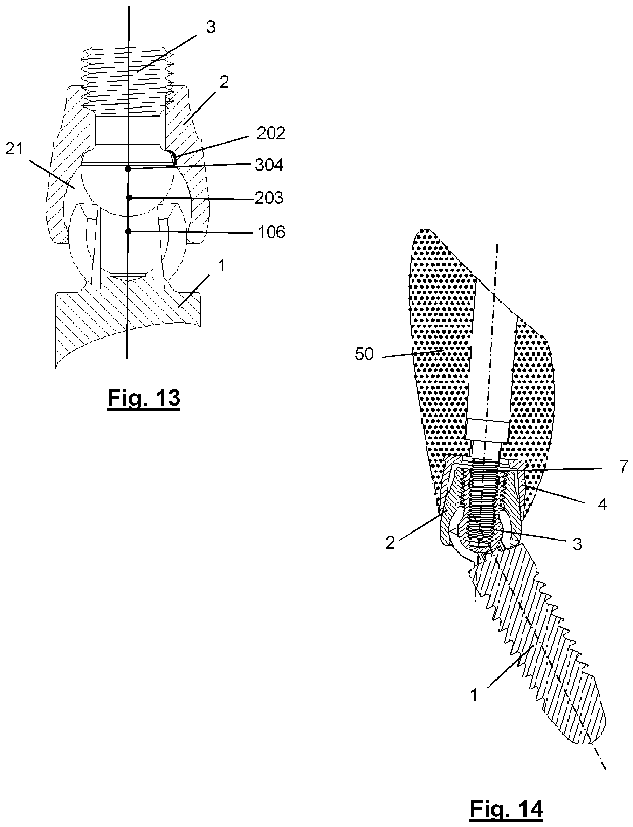

The connection segment 13 is configured by an open housing with a mostly spherical enveloping outer surface and the hollow 15 of which has a mostly semispherical concave surface. In fact, the connection segment 13 is formed by a plurality of radially distributed flexible sectors 105 or petals in the form of spherical lunes, and for this reason it has been indicated that the enveloping outer surface is mostly spherical. In Figure 1 it can be seen how the connection segment 13 comprises several slots 18 or cuts in the direction of the meridians of the mostly spherical enveloping outer surface, separating the flexible sectors 105 or petals from one another. The center 106 of the outer surface coincides with the center of the semispherical surface of the hollow 15. The hollow 15 is made up of the semispherical concave surface, with a center coinciding with the outer sphere, and of a cylindrical portion 107 from its maximum diameter to the end of the connection segment 13. The fact that the connection segment 13 is divided into sectors 105 facilitates its elastic folding towards the center, required for mounting the implantology assembly, as will be seen in Figure 13.

With regard to the second component of the implantology assembly 10, the prosthetic abutment 2, it can be observed in Figures 2 to 4 is formed by a body provided with a threaded through hole 22 and a coupling cavity 21 with a spherical concave surface 204 formed by a wall which can be fitted in a partially enveloping manner and on the outside to the connection segment 13 of the implant body 1.

The partially spherical coupling cavity 21 has a size and a center considerably coinciding with the center of the outer surface of the implant body 1. The tightening screw 3 will be housed in the bore or threaded through hole 22 with thread profile 200. A transition hollow 202 is configured between the semispherical area of the coupling cavity 21 and the start of the thread 200 of the threaded through hole 22 where a portion of the tightening screw 3 can be housed during the operation for mounting the implantology assembly 10. This particularity is shown in the explanation of the assembly operation (see Figure 13).

The outer geometry of the prosthetic abutment 2, at the end closest to the implant body 1, is restricted by the functional angulation and orbital movement needs of the implantology assembly 10, and at the occlusal end, it is made conditional on the system for fixing to the prosthesis, whether it is removable or screwed in.

On the periphery or at the end opposite the implant body 1, the prosthetic abutment 2 is provided with mechanical elements for securing same during the operation of tightening the assembly or fixing in the desired position.

In Figures 2 to 4, there can be observed on the outer surface of the prosthetic abutment 2 several regularly distributed notches 201 where the torque necessary for screwing the implantology assembly 10 to the mandibular bone by means of a tool conceived for that purpose is applied if the mounted assembly is to be implanted. These same notches 201, faces, bores or other that can be used as a grip for the mentioned tool, can be arranged on the periphery of the prosthetic abutment 2 or at its end. Figures 2 to 4 describe a preferred though non-limiting geometry.

The center 203 of the spherical concave surface 204 is the center of rotation and pivoting of the prosthetic end of the implantology assembly 10, coinciding with the center of the connection segment 13 of the implant body 1 and of the screw head 31 of the tightening screw 3 when the assembly is mounted (Figures 8 to 12).

The prosthetic abutment 2 shown comprises at the edge of the end of the spherical coupling cavity 21 at least one plane or a curved additional angulation notch 205 which allows an increase in angulation.

In Figures 5 and 6, the tightening screw 3, which is formed by a screw head 31 mostly having a spherical shape or surface 305 according to the drawings, is depicted. The threaded shank 32 has a dimension and thread 301 corresponding with the dimension and thread 200 of the threaded through hole 22 of the prosthetic abutment 2, such that the threaded shank 32 can be shifted longitudinally by means of the actuation of the thread to achieve the threaded attachment with the prosthetic abutment 2.

When the threaded shank 32 is introduced in the threaded through hole 22, the screw head 31 is laterally surrounded by the wall with a spherical concave surface 204 that forms the spherical coupling cavity 21 of the prosthetic abutment 2. There is space between said wall and the screw head 31 for the connection segment 13, since, in fact, it is the screw head 31 that is capable of being tightly introduced into the hollow 15 of the connection segment 13.

The tightening screw 3 can furthermore be provided with a central threaded bore to facilitate screwing in the visible prosthesis (either individual teeth, bridges or full arch implants). Said option of tightening screw 3 with a central threaded bore is not shown in all the drawings for the sake of greater clarity of the images and has only been contemplated in Figure 14, which will be discussed below.

In Figure 6 it can be seen that the threaded shank 32, at its free end opposite the sphere, is provided with an impression 300 or groove in the form of a hexagonal, square, hexalobular or other shape, for the insertion of the tip of a tool for applying torque to the tightening screw 3 necessary for fixing the implantology assembly 10 in the desired position. It is in the impression 300 where torsional force is applied to operate the tightening screw 3, the profile being hexalobular in the depicted case.

The transition portion 303 between the end of the spherical concave surface 305 and the cylindrical neck 302 forms an inclined or curved segment.

In an operative mounting position of the implantology assembly 10, shown in any of Figures 8 to 12, the threaded shank 32 of the tightening screw 3 is inserted in the threaded through hole 22 of the prosthetic abutment 2 and the screw head 31 is inside the hollow 15 of the connection segment 13 of the implant body 1. Furthermore, in this operative mounting position, the wall forming the spherical coupling cavity 21 of the prosthetic abutment 2 is fitted in a partially enveloping manner and on the outside to the connection segment 13.

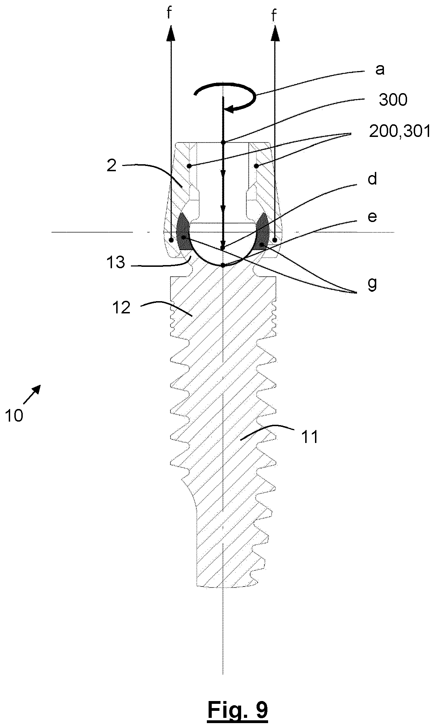

In the operative mounting position, the center 106 of the outer surface of the connection segment 13 of the implant body 1, the center 203 of the spherical concave surface 204 of the prosthetic abutment 2 and the center 304 of the spherical concave surface 305 of the screw head 31 coincide in position. Thus, Figure 9 depicts with an arrow the capacity of the prosthetic abutment 2 and the tightening screw 3 to integrally rotate with respect to the implant body 1 about the longitudinal axis of the threaded shank 32 of the tightening screw 3. Also in the operative mounting position, the prosthetic abutment 2 and the tightening screw 3 have to capacity to turn integrally with respect to the implant body 1 such that the axial axis 101 of the implant body 1 and the longitudinal axis 306 of the threaded shank 32 can be arranged forming a plurality of angles with one another.

Figure 7 is a section view according to a vertical longitudinal plane of section of a prosthetic capsule 4 or cap which is not part of the implantology assembly 10 but is shown as a preferred option for collaborating with the implantology assembly 10. As discussed above, the outer shape of the prosthetic abutment 2 depends on the desired prosthetic solution, whether it is removable or screwed in, and on the variables that each of them may comprise. It should be pointed out that this prosthetic capsule 4 can be dispensed with if the prosthetic abutment 2 itself is housed in the prosthesis and fixed to same. Figure 7 shows the fixing area 401 with a tapered geometry for fixing to the prosthetic abutment 2, understood as being part of the implantology assembly 10, and a wall 400 which remains longitudinally spaced from the prosthetic abutment 2, since said distance is what allows absorbing the differences in diameter of the two cones when they are coupled together.

Figures 8a, 8b and 8c show the implantology assembly 10 in three operative mounting positions. In the operative mounting position, also depicted in Figure 9, the screw head 31 is inside the hollow 15 of the connection segment 13 of the implant body 1 with the threaded shank 32 of the tightening screw 3 inserted in the threaded through hole 22 of the prosthetic abutment 2. Furthermore, the wall forming the spherical coupling cavity 21 of the prosthetic abutment 2 is fitted in a partially enveloping manner and on the outside to the connection segment 13 of the implant body 1. In the operative mounting position, the center 106 of the outer surface of the connection segment 13 of the implant body 1, the center 203 of the spherical concave surface 204 of the prosthetic abutment 2 and the center 304 of the spherical concave surface 305 of the screw head 31 coincide in position. In the operative mounting position, the prosthetic abutment 2 and the tightening screw 3 have the capacity to rotate integrally with respect to the implant body 1 about the longitudinal axis of the threaded shank 32 of the tightening screw 3, and they furthermore have the capacity to turn integrally with respect to the implant body 1 such that the axial axis 101 of the implant body 1 and the longitudinal axis 306 of the threaded shank 32 can be arranged forming a plurality of angles with one another, as shown in Figures 8a-8c.

Thus, in Figure 8a the axes of the components of the implantology assembly 10 are aligned, in Figure 8b in a position with an inclination of 32° of the axial axis 101 of the implant body 1 with respect to the prosthetic assembly (the inclination limit according to the design of the implantology assembly 10 depicted), and in Figure 8c the same assembly, but shifted another 8°, making the most of the possibility of mounting by means of a frustoconical prosthetic capsule 4 of 8° in the prosthesis.

Figure 9 serves to explain the operation of the implantology assembly 10 and its locking in a certain rotation and angulation position.

In view of the images, the convergence of the centers of all the spherical elements in a single point can be seen, with the center 106 of the outer surface of the connection segment 13 of the implant body 1, the center 203 of the spherical concave surface 204 of the prosthetic abutment 2 and the center 304 of the spherical concave surface 305 of the screw head 31 coinciding in position. Because of this coincidence of centers which the prosthetic assembly, formed by the prosthetic abutment 2 and the tightening screw 3 can freely oscillate angularly and turn orbitally.

If a torsional moment "a" is applied on the impression 300 of the tightening screw 3, securing the prosthetic abutment 2 by means of notches 201 (by way of anchors), the tightening screw 3 tends to be displaced "d" downwards by means of its thread 301 complementary to thread 200 and to exert pressure on the base of the hollow 15 of the implant body 1 in area "e", which has the tendency to space the prosthetic abutment 2 from the implant body 1 (see arrows "f"), which undoubtedly causes the locking of the prosthetic assembly in the shaded area "g".

If torque "a" applied is below the assembly locking threshold, friction is produced between the parts that is sufficient for adjusting the prosthetic abutment 2 to the desired position to as to definitively lock the assembly when that desired position is confirmed. Of course, these actions and reactions are produced in any of the positions of the moving elements of the prosthetic portion of the implant.

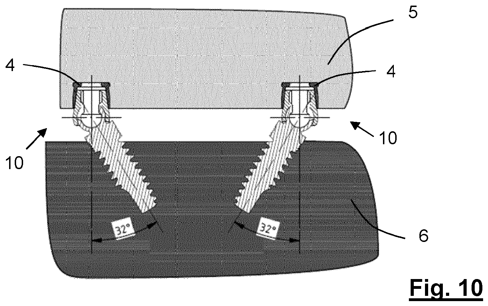

Figure 10 shows two implantology assemblies 10 with their prosthetic assemblies, each formed by a prosthetic abutment 2 and the tightening screw 3, fitted in the prosthesis 5 by means of prosthetic capsules 4, and with implant bodies 1 the axes of which have, fixed in the maxillary bone 6, an inclination of 32° with respect to the longitudinal axis of the threaded shank 32 of the tightening screw 3.

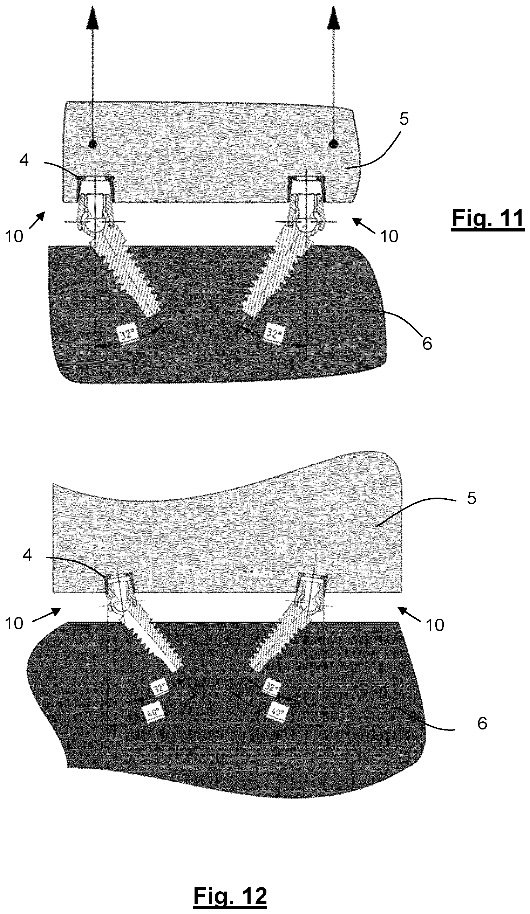

Figure 11 shows the same situation as Figure 10 but with the prosthesis 5 separated somewhat from the prosthetic assemblies of the implantology assemblies 10, which does not prevent the mounting of the implantology assemblies 10 being perfectly feasible.

Figure 12 shows the same situation as Figure 10 with the implant bodies 1 of the implantology assemblies 10 at 40°, with the prosthetic assemblies also fitted, where it can be observed that the prosthetic capsules 4 are forced to an angle of about 8° (like in Figure 8c), which is the mounting limit thereof, since further inclination would not be feasible. In this case, the sum of 32° and the additional 8° achieved by making the most of the 16° of conical angle of the prosthetic abutment 2, yields 40°.

A conical angle of the prosthetic abutment 2 of 16° (8° of inclination) is depicted in all the drawings; naturally, if said conical angle is different, the correction capacity varies with it.

Figure 13 depicts a critical point of the assembly operation of the components of the implantology assembly 10. First, the tightening screw 3 must be mounted inside the prosthetic abutment 2. Once mounted, the implant body 1, with the assembly formed by the prosthetic abutment 2 and the tightening screw 3, will be placed aligned such that the axial axis 101 of the implant body 1 and the longitudinal axis 306 of the threaded shank 32 coincide.

Next, axial pressure is exerted by one against the other, such that the smaller diameter of the prosthetic abutment 2 in its lower portion which provides access to the coupling cavity 21 forces the flexible sectors 105 or petals to fold until reaching the critical point shown in Figure 13. It can be observed that the sphere of the head of the tightening screw 3 does not hinder that operation. Upon continuing with the downward movement of the prosthetic abutment 2 and tightening screw 3 assembly with respect to the implant body 1, the sectors 105 tend to recover their diameter elastically, thus being coupled to the walls of the spherical concave surface 204 of the spherical coupling cavity 21 of the prosthetic abutment 2, coinciding at that time the point of the center 106 of the outer surface of the implant body 1 with the center 203 of the prosthetic abutment 2.

Next, the tightening screw 3 is screwed in to make the point of the center 304 of the spherical concave surface 305 coincide with the center 106 of the outer surface of the implant body 1 and with the center 203 of the prosthetic abutment 2, achieving an oscillating and turning assembly that cannot be removed.

In any of the possible rotational or orbital positions, if the tightening screw 3 continues to be screwed in, it exerts pressure on the base of the hollow 15 of the implant body 1 and tends to separate same from the prosthetic abutment 2, which locks the assembly in any of the possible positions.

The preceding explanation depicts and makes implicit reference to the fact that the prosthetic abutment 2 has a tapered outer surface, namely for this example, a conical angle of 16° (8° of inclination). The usefulness of tapered couplings between implant, or accessory secured to same, and the prosthesis is known.

A very wide angle favors alignment error correction, but requires solutions using screws, since as the conical angle increases, the self-retaining capacity of the prosthesis drops or simply disappears. For the case of solutions using screws, it has been envisaged that the prosthetic abutment 2, or else the tightening screw 3, is provided with a thread that can receive a screw which, going through the prosthesis or crown, is fixed to the implantology assembly 10. This solution is depicted in Figure 14, which shows a prosthesis assembly using screws.

In the case of Figure 14, it shows an option of a tightening screw 3 provided with a threaded bore coinciding with its longitudinal axis, capable of housing the thread of a prosthetic screw 7 which in turn fixes a tooth or a prosthetic crown 50. This is only one option, since another preferred option would be to modify the end of the prosthetic abutment 2, increasing its length, such that this increase in length, and therefore of threaded bore, would allow, like in the preceding case, housing the thread of another prosthetic screw model 7 with a larger diameter. Figure 14 shows only the elements necessary for understanding the operation, having dispensed with depicted maxillary bone or gingival elements given that the same system is basically valid for solutions comprising a single tooth, like that depicted, as a part of bridges or full arch implants.

Moreover, with smaller angles, by friction, the prosthesis tends to secure itself, such that with a good selection of those degrees a prosthesis that can be removed by the user or than can be fixed such that it can be removed only by the dentist, without resorting to using screws if this is not desired, can be obtained.

Thus, the implantology assembly 10 may contemplate either of the two described options, with the use of screws in the event that the conical angle of the prosthetic abutment 2 is considerable and the self-securing solution for smaller conical angles. In any case, the prosthetic capsule 4 or cap receiving the prosthetic abutment 2, which is not part of the implantology assembly 10 *per se*, must by appropriately fixed to the prosthesis.

## Claims

1. - A dental implantology assembly (10) comprising an implant body (1) devoid of an axial central bore of the type of axial central bore that houses a screw for fixing an implant body to a prosthetic abutment, a prosthetic abutment (2) intended for being coupled to the implant body (1), and a tightening screw (3) intended for fixing the prosthetic abutment (2) to the implant body (1), wherein
- the implant body (1) is a single body comprising an apical segment (11) for being fixed to the solid maxillary bone provided with a fixing thread (102), a solid gingival closure segment (12), and a connection segment (13) configured by an open housing with a mostly spherical enveloping outer surface and a hollow (15) with a mostly semispherical concave surface, wherein the center (106) of the spherical outer surface coincides with the center of the semispherical surface of the hollow (15), the connection segment (13) being formed by a plurality of radially distributed flexible sectors (105) or petals in the form of spherical lunes,
- the prosthetic abutment (2) is formed by a body provided with a coupling cavity (21) with a spherical concave surface (204) formed by a wall which can be fitted in a partially enveloping manner and on the outside to the connection segment (13) of the implant body (1), and provided with a threaded through hole (22),
- the tightening screw (3) is formed by a screw head (31) with mostly a spherical surface (305), followed by a cylindrical neck (302) and by a threaded shank (32) that can be introduced in the threaded through hole (22) of the prosthetic abutment (2), such that the screw head (31) can be introduced in the hollow (15) of the connection segment (13) of the implant body (1) with the threaded shank (32) of the tightening screw (3) inserted in the threaded through hole (22) of the prosthetic abutment (2),
- and in an operative mounting position of the implantology assembly (10) wherein the screw head (31) is inside the hollow (15) of the connection segment (13) of the implant body (1) with the threaded shank (32) of the tightening screw (3) inserted in the threaded through hole (22) of the prosthetic abutment (2), and the wall forming the spherical coupling cavity (21) of the prosthetic abutment (2) is fitted in a partially enveloping manner and on the outside to the connection segment (13) of the implant body (1), the center (106) of the outer surface of the connection segment (13) of the implant body (1), the center (203) of the spherical concave surface (204) of the prosthetic abutment (2) and the center (304) of the spherical concave surface (305) of the screw head (31) are coinciding in position, the prosthetic abutment (2) and the tightening screw (3) having the capacity to rotate integrally with respect to the implant body (1) about the longitudinal axis of the threaded shank (32) of the tightening screw (3) and the capacity to integrally turn with respect to the implant body (1) such that the axial axis (101) of the implant body (1) and the longitudinal axis (306) of the threaded shank (32) can be arranged forming a plurality of angles with one another.

2. - The dental implantology assembly (10) according to claim 1, **characterized in that** the plurality of angles between the axial axis (101) of the implant body (1) and a side of the prosthetic abutment (2), when the prosthetic abutment (2) has a tapered side surface with a 16° taper, comprises values of angles ranging from 0° to 40°.

3. - The dental implantology assembly (10) according to claim 2, **characterized in that** the plurality of angles between the axial axis of the implant body (1) and the longitudinal axis of the threaded shank (32) of the tightening screw (3) comprises values of angles ranging from 0° to 32°.

4. - The dental implantology assembly (10) according to any one of the preceding claims, **characterized in that** the hollow (15) of the connection segment (13) of the implant body (1) comprises, from its open end to the semispherical concave surface, a cylindrical surface segment (107) with a diameter equal to the diameter of said semispherical concave surface.

5. - The dental implantology assembly (10) according to any one of the preceding claims, **characterized in that** the gingival closure segment (12) of the implant body (1) comprises a smooth gingival closure area.

6. - The dental implantology assembly (10) according to claim 5, **characterized in that** the gingival closure segment (12) further comprises an area with a thread profile (103).

7. - The dental implantology assembly (10) according to any one of the preceding claims, **characterized in that** the implant body (1) comprises a neck (104) formed by a solid section arranged between the connection segment (13) and the gingival closure segment (12).

8. - The dental implantology assembly (10) according to any one of the preceding claims, **characterized in that** the connection segment (13) of the implant body (1) comprises several slots (18) in the direction of the meridians of the mostly spherical enveloping outer surface which separate the radially distributed flexible sectors (105) or petals in the form of spherical lunes.

9. - The dental implantology assembly (10) according to any one of the preceding claims, **characterized in that** in the tightening screw (3), the threaded shank (32) is provided at its free end opposite the cylindrical neck (302) with an impression (300) or groove for the insertion of the tip of a tool for applying torque to the tightening screw (3).

10. - The dental implantology assembly (10) according to any one of the preceding claims, **characterized in that** the prosthetic abutment (2) comprises on its outer surface several notches (201), cuts, faces or profiles for applying torque.

11. - The dental implantology assembly (10) according to any one of the preceding claims, **characterized in that** the prosthetic abutment (2) comprises at the edge of the end of the spherical coupling cavity (21) at least one additional angulation notch (205) which allows an increase in angulation.

12. - The dental implantology assembly (10) according to claim 11, **characterized in that** the at least one additional angulation notch (205) is a curved notch.

13. The dental implantology assembly (10) according to any one of claims 1 to 10, **characterized in that** the prosthetic abutment (2) comprises at the edge of the end of the spherical coupling cavity (21) at least one plane which allows an increase in angulation.

14. - The dental implantology assembly (10) according to any one of the preceding claims, **characterized in that** the prosthetic abutment (2) has a tapered side surface.

15. - The dental implantology assembly (10) according to any one of the preceding claims, **characterized in that** the tightening screw (3) is provided with a central threaded bore extending along the inside of the threaded shank (32) to an interior portion of the screw head (31).

## Patentansprüche

1. Zahnimplantologie-Anordnung (10) umfassend einen Implantatkörper (1) frei von einer axialen Mittelbohrung der Art einer axialen Mittelbohrung, welche eine Schraube zur Fixierung eines Implantatkörpers an einem prothetischen Abutment aufnimmt, ein prothetisches Abutment (2), welches dazu vorgesehen ist, mit dem Implantatkörper (1) gekoppelt zu werden, und eine Spannschraube (3), welche dazu vorgesehen ist, das prothetische Abutment (2) am Implantatkörper (1) zu fixieren, wobei
- der Implantatkörper (1) ein Einzelkörper ist, welcher ein apikales Segment (11) für dessen Fixierung am soliden Kieferknochen, welches mit einem Fixierungsgewinde (102) versehen ist, ein solides gingivales Schließsegment (12) und ein Verbindungssegment (13), welches durch ein offenes Gehäuse mit einer größtenteils sphärischen umhüllenden Außenfläche und einem Hohlraum (15) mit einer größtenteils hemisphärischen konkaven Fläche ausgebildet ist, umfasst, wobei der Mittelpunkt (106) der sphärischen Außenfläche mit dem Mittelpunkt der hemisphärischen Fläche des Hohlraums (15) übereinstimmt, wobei das Verbindungssegment (13) aus einer Vielzahl von radial verteilten flexiblen Sektoren (105) oder Scheiben in Form von sphärischen Kugelzweiecken gebildet ist,
- das prothetische Abutment (2) aus einem Körper gebildet ist, welcher mit einer Kopplungsvertiefung (21) mit einer sphärischen konkaven Fläche (204), welche aus einer Wand gebildet ist, welche auf eine teilweise umhüllende Weise und von außen an das Verbindungssegment (13) des Implantatkörpers (1) angepasst werden kann, versehen ist, und mit einem gewindeten Durchgangsloch (22) versehen ist,
- die Spannschraube (3) aus einem Schraubenkopf (31) mit ein größtenteils sphärischen Fläche (305) gebildet ist, gefolgt von einem zylindrischen Hals (302) und von einem gewindeten Schaft (32), welcher in das gewindete Durchgangsloch (22) des prothetischen Abutments (2) eingeführt werden kann, sodass der Schraubenkopf (31) in den Hohlraum (15) des Verbindungssegments (13) des Implantatkörpers (1), mit dem gewindeten Schaft (32) der Spannschraube (3) in das gewindete Durchgangsloch (22) des prothetischen Abutments (2) eingesetzt, eingeführt werden kann,
- und in einer betriebsfähige Einbaustellung der Implantologie-Anordnung (10), in welcher der Schraubenkopf (31) innerhalb des Hohlraums (15) des Verbindungssegments (13) des Implantatkörpers (1), mit dem gewindeten Schaft (32) der Spannschraube (3) in das gewindete Durchgangsloch (22) des prothetischen Abutments (2) eingesetzt, ist, und die Wand, welche die sphärische Kopplungsvertiefung (21) des prothetischen Abutments (2) bildet, auf eine teilweise umhüllende Weise und von außen an das Verbindungssegment (13) des Implantatkörpers (1) angepasst ist, wobei der Mittelpunkt (106) der Außenfläche des Verbindungssegments (13) des Implantatkörpers (1), der Mittelpunkt (203) der sphärischen konkaven Fläche (204) des prothetischen Abutments (2) und der Mittelpunkt (304) der sphärischen konkaven Fläche (305) des Schraubenkopfs (31) in deren Stellung übereinstimmen, wobei das prothetische Abutment (2) und die Spannschraube (3) die Fähigkeit haben, integral in Bezug auf den Implantatkörper (1) um die Längsachse des gewindeten Schafts (32) der Spannschraube (3) herum zu rotieren, und die Fähigkeit haben, sich integral in Bezug auf den Implantatkörper (1) zu drehen, sodass die Axialachse (101) des Implantatkörpers (1) und die Längsachse (306) des gewindeten Schafts (32) unter Bildung einer Vielzahl von Winkeln zueinander angeordnet werden können.

2. Zahnimplantologie-Anordnung (10) nach Anspruch 1, **dadurch gekennzeichnet, dass** die Vielzahl von Winkeln zwischen der Axialachse (101) des Implantatkörpers (1) und einer Seite des prothetischen Abutments (2), wenn das prothetische Abutment (2) eine verjüngte Seitenfläche mit einer 16°-Verjüngung aufweist, Winkelwerte umfassen, welche zwischen 0° und 40° liegen.

3. Zahnimplantologie-Anordnung (10) nach Anspruch 2, **dadurch gekennzeichnet, dass** die Vielzahl von Winkeln zwischen der Axialachse des Implantatkörpers (1) und der Längsachse des gewindeten Schafts (32) der Spannschraube (3) Winkelwerte umfassen, welche zwischen 0° und 32° liegen.

4. Zahnimplantologie-Anordnung (10) nach einem der vorhergehenden Ansprüche, **dadurch gekennzeichnet, dass** der Hohlraum (15) des Verbindungssegments (13) des Implantatkörpers (1), von dessen offenen Ende aus zur hemisphärischen konkaven Fläche, ein Zylinderflächensegment (107) mit einem Durchmesser gleich dem Durchmesser der genannten hemisphärischen konkaven Fläche umfasst.

5. Zahnimplantologie-Anordnung (10) nach einem der vorhergehenden Ansprüche, **dadurch gekennzeichnet, dass** das gingivale Schließsegment (12) des Implantatkörpers (1) einen glatten gingivalen Schließbereich umfasst.

6. Zahnimplantologie-Anordnung (10) nach Anspruch 5, **dadurch gekennzeichnet, dass** das gingivale Schließsegment (12) zusätzlich einen Bereich mit einem Gewindeprofil (103) umfasst.

7. Zahnimplantologie-Anordnung (10) nach einem der vorhergehenden Ansprüche, **dadurch gekennzeichnet, dass** der Implantatkörper (1) einen Hals (104) umfasst, welcher aus einem soliden Abschnitt gebildet ist, welcher zwischen dem Verbindungssegment (13) und dem gingivalen Schließsegment (12) angeordnet ist.

8. Zahnimplantologie-Anordnung (10) nach einem der vorhergehenden Ansprüche, **dadurch gekennzeichnet, dass** das Verbindungssegment (13) des Implantatkörpers (1) mehrere Schlitze (18) in die Richtung der Meridiane der größtenteils sphärischen umhüllenden Außenfläche umfasst, welche die radial verteilten flexiblen Sektoren (105) oder Scheiben in Form von sphärischen Kugelzweiecken trennen.

9. Zahnimplantologie-Anordnung (10) nach einem der vorhergehenden Ansprüche, **dadurch gekennzeichnet, dass** in der Spannschraube (3), der gewindete Schaft (32) an dessen freien Ende, welches dem zylindrischen Hals (302) gegenüberliegt, mit einer Prägung (300) oder Nut versehen ist, für das Einsetzen der Spitze eines Werkzeugs, um ein Drehmoment auf die Spannschraube (3) aufzubringen.

10. Zahnimplantologie-Anordnung (10) nach einem der vorhergehenden Ansprüche, **dadurch gekennzeichnet, dass** das prothetische Abutment (2) auf dessen Außenfläche mehrere Einkerbungen (201), Schnitte, Flächen oder Profile für das Aufbringen eines Drehmoments umfasst.

11. Zahnimplantologie-Anordnung (10) nach einem der vorhergehenden Ansprüche, **dadurch gekennzeichnet, dass** das prothetische Abutment (2) am Rand des Endes der sphärischen Kopplungsvertiefung (21) mindestens eine zusätzliche Winkelungseinkerbung (205) umfasst, welche eine Erhöhung der Winkelung erlaubt.

12. Zahnimplantologie-Anordnung (10) nach Anspruch 11, **dadurch gekennzeichnet, dass** die mindestens eine zusätzliche Winkelungseinkerbung (205) eine gekrümmte Einkerbung ist.

13. Zahnimplantologie-Anordnung (10) nach einem der Ansprüche 1 bis 10, **dadurch gekennzeichnet, dass** das prothetische Abutment (2) am Rand des Endes der sphärischen Kopplungsvertiefung (21) mindestens eine Ebene umfasst, welche eine Erhöhung der Winkelung erlaubt.

14. Zahnimplantologie-Anordnung (10) nach einem der vorhergehenden Ansprüche, **dadurch gekennzeichnet, dass** das prothetische Abutment (2) eine verjüngte Seitenfläche aufweist.

15. Zahnimplantologie-Anordnung (10) nach einem der vorhergehenden Ansprüche, **dadurch gekennzeichnet, dass** die Spannschraube (3) mit einer gewindeten Mittelbohrung versehen ist, welche sich entlang des Inneren des gewindeten Schafts (32) zu einem Innenteil des Schraubenkopfs (31) erstreckt.

## Revendications

1. Ensemble d'implantologie dentaire (10) comprenant un corps d'implant (1) dépourvu d'un alésage central axial du type d'alésage central axial qui loge une vis pour la fixation d'un corps d'implant à un pilier prothétique, un pilier prothétique (2) destiné à être couplé au corps d'implant (1), et une vis de serrage (3) destinée à fixer le pilier prothétique (2) au corps d'implant (1), dans lequel
- le corps d'implant (1) est un corps unique comprenant un tronçon apical (11) propre à être fixé à l'os maxillaire solide pourvu d'un filetage de fixation (102), un tronçon de fermeture gingivale solide (12), et un tronçon de connexion (13) configuré par un logement ouvert avec une surface externe enveloppante essentiellement sphérique et un creux (15) avec une surface concave essentiellement demi-sphérique, dans lequel le centre (106) de la surface externe sphérique coïncide avec le centre de la surface demi-sphérique du creux (15), le tronçon de connexion (13) étant formé par une pluralité de secteurs flexibles distribués radialement (105) ou pétales en forme de lunules sphériques,
- le pilier prothétique (2) est formé par un corps pourvu d'une cavité d'accouplement (21) avec une surface concave sphérique (204) formée par une paroi qui peut être ajustée d'une manière partiellement enveloppante et à l'extérieur par rapport au tronçon de connexion (13) du corps d'implant (1), et pourvu d'un trou traversant fileté (22),
- la vis de serrage (3) est formée par une tête de vis (31) avec une surface essentiellement sphérique (305), suivie d'un col cylindrique (302) et d'une tige filetée (32) qui peuvent être introduits dans le trou traversant fileté (22) du pilier prothétique (2), de sorte que la tête de vis (31) peut être introduite dans le creux (15) du tronçon de connexion (13) du corps d'implant (1) avec la tige filetée (32) de la vis de serrage (3) insérée dans le trou traversant fileté (22) du pilier prothétique (2),
- et dans une position de montage opérationnelle de l'ensemble d'implantologie (10) dans laquelle la tête de vis (31) est à l'intérieur du creux (15) du tronçon de connexion (13) du corps d'implant (1) avec la tige filetée (32) de la vis de serrage (3) insérée dans le trou traversant fileté (22) du pilier prothétique (2) et la paroi formant la cavité d'accouplement sphérique (21) du pilier prothétique (2) est ajustée d'une manière partiellement enveloppante et à l'extérieur par rapport au tronçon de connexion (13) du corps d'implant (1), le centre (106) de la surface externe du tronçon de connexion (13) du corps d'implant (1), le centre (106) de la surface concave sphérique (204) du pilier prothétique (2) et le centre (304) de la surface concave sphérique (305) de la tête de vis (31) coïncident en position, le pilier prothétique (2) et la vis de serrage (3) ayant la capacité de pivoter intégralement par rapport au corps d'implant (1) autour de l'axe longitudinal de la tige filetée (32) de la vis de serrage (3) et la capacité de tourner intégralement par rapport au corps d'implant (1) de sorte que l'axe axial (101) du corps d'implant (1) et l'axe longitudinal (306) de la tige filetée (32) peuvent être disposés en formant une pluralité d'angles l'un avec l'autre.

2. Ensemble d'implantologie dentaire (10) selon la revendication 1, **caractérisé en ce que** la pluralité d'angles entre l'axe axial (101) du corps d'implant (1) et un côté du pilier prothétique (2), lorsque le pilier prothétique (2) a une surface latérale conique avec une conicité de 16°, comprend des valeurs d'angles allant de 0° à 40°.

3. Ensemble d'implantologie dentaire (10) selon la revendication 2, **caractérisé en ce que** la pluralité d'angles entre l'axe axial du corps d'implant (1) et l'axe longitudinal de la tige filetée (32) de la vis de serrage (3) comprend des valeurs d'angles allant de 0° à 32°.

4. Ensemble d'implantologie dentaire (10) selon l'une quelconque des revendications précédentes, **caractérisé en ce que** le creux (15) du tronçon de connexion (13) du corps d'implant (1) comprend, depuis son extrémité ouverte jusqu'à la surface concave demi-sphérique, un tronçon de surface cylindrique (107) avec un diamètre égal au diamètre de ladite surface concave demi-sphérique.

5. Ensemble d'implantologie dentaire (10) selon l'une quelconque des revendications précédentes, **caractérisé en ce que** le tronçon de fermeture gingivale (12) du corps d'implant (1) comprend une zone de fermeture gingivale lisse.

6. Ensemble d'implantologie dentaire (10) selon la revendication 5, **caractérisé en ce que** le tronçon de fermeture gingivale (12) comprend en outre une zone avec un profil de filetage (103).

7. Ensemble d'implantologie dentaire (10) selon l'une quelconque des revendications précédentes, **caractérisé en ce que** le corps d'implant (1) comprend un col (104) formé par une section solide disposée entre le tronçon de connexion (13) et le tronçon de fermeture gingivale (12).

8. Ensemble d'implantologie dentaire (10) selon l'une quelconque des revendications précédentes, **caractérisé en ce que** le tronçon de connexion (13) du corps d'implant (1) comprend plusieurs fentes (18) dans la direction des méridiens de la surface externe enveloppante essentiellement sphérique qui séparent les secteurs flexibles distribués radialement (105) ou pétales en forme de lunules sphériques.

9. Ensemble d'implantologie dentaire (10) selon l'une quelconque des revendications précédentes, **caractérisé en ce que** dans la vis de serrage (3), la tige filetée (32) est pourvue à son extrémité libre opposée au col cylindrique (302) d'une empreinte (300) ou rainure pour l'insertion de la pointe d'un outil pour appliquer un couple à la vis de serrage (3).

10. Ensemble d'implantologie dentaire (10) selon l'une quelconque des revendications précédentes, **caractérisé en ce que** le pilier prothétique (2) comprend sur sa surface externe plusieurs encoches (201), coupures, faces ou profils pour l'application du couple.

11. Ensemble d'implantologie dentaire (10) selon l'une quelconque des revendications précédentes, **caractérisé en ce que** le pilier prothétique (2) comprend au bord de l'extrémité de la cavité d'accouplement sphérique (21) au moins une encoche d'angulation additionnelle (205) qui permet une augmentation de l'angulation.

12. Ensemble d'implantologie dentaire (10) selon la revendication 11, **caractérisé en ce que** l'au moins une encoche d'angulation additionnelle (205) est une encoche incurvée.

13. Ensemble d'implantologie dentaire (10) selon l'une quelconque des revendications 1 à 10, **caractérisé en ce que** le pilier prothétique (2) comprend au bord de l'extrémité de la cavité d'accouplement sphérique (21) au moins un plan qui permet une augmentation de l'angulation.

14. Ensemble d'implantologie dentaire (10) selon l'une quelconque des revendications précédentes, **caractérisé en ce que** le pilier prothétique (2) présente une surface latérale conique.

15. Ensemble d'implantologie dentaire (10) selon l'une quelconque des revendications précédentes, **caractérisé en ce que** la vis de serrage (3) est pourvue d'un alésage central fileté s'étendant le long de l'intérieur de la tige filetée (32) jusqu'à une portion intérieure de la tête de vis (31).
